# EUROPÄISCHE PATENTSCHRIFT

(11) **EP 1 071 896 B1**
(45) Veröffentlichungstag und Bekanntmachung des Hinweises auf die Patenterteilung: **13.11.2002**
(21) Anmeldenummer: 99920655.0
(22) Anmeldetag: 13.04.1999
(51) Int. Cl.: F16J 15/36

(54) **DICHTUNGSELEMENT FÜR EINE GLEITRINGDICHTUNGSANORDNUNG**
SEAL ELEMENT FOR A SLIDE RING SEAL ARRANGEMENT
ELEMENT D'ETANCHEITE DESTINE A UN SYSTEME D'ETANCHEITE A ANNEAU DE GLISSEMENT

(30) Priorität: 15.04.1998 DE 29806768 U
(43) Veröffentlichungstag der Anmeldung: 31.01.2001
(73) Patentinhaber: Burgmann Dichtungswerke GmbH & Co. KG, 82515 Wolfratshausen (DE)
(72) Erfinder: MATZ, Berthold, D-82515 Wolfratshausen (DE); NOSOWICZ, Josef, D-82538 Geretsried (DE); RIES, Wolfgang, D-82438 Eschenlohe (DE); SVEJKOVSKY, Reinhard, D-82538 Geretsried (DE)
(74) Vertreter: Schmidt, Horst, Dr.
(86) Internationale Anmeldenummer: EP9902482
(87) Internationale Veröffentlichungsnummer: WO99053227

(56) Entgegenhaltungen:
- EP-A- 0 525 410
- US-A- 2 512 749
- US-A- 4 378 119
- US-A- 5 013 051
- US-A- 5 368 312

## Beschreibung

Die Erfindung betrifft ein Dichtungselement für eine Gleitringdichtungsanordnung gemäss dem Oberbegriff des Anspruchs 1 und insbesondere ein solches, das den Bau einer Gleitringdichtungsanordnung mit besonderer, jedoch nicht ausschliesslicher Eignung für aggressive Medien ermöglicht.

Zur Abdichtung aggressiver Medien wurden bislang vorwiegend doppeltwirkende, sperrfluidbeaufschlagte Gleitringdichtungsanordnungen vorgesehen, bei denen nur die vom aggressiven Medium unmittelbar beaufschlagten Aussenbereiche aus chemisch beständigen Materialien ausgebildet werden mussten. Doppeltwirkende Gleitringdichtungsanordnungen sind jedoch vergleichsweise kompliziert aufgebaut und damit teuer. Sie erfordern ausserdem einen hohen Wartungsaufwand sowie eine zuverlässige Sperrfluidversorgung. Es wurde auch schon vorgeschlagen (DE-B-1525825), zur Abdichtung aggressiver Medien einfachwirkende, innenbeaufschlagte Gleitringdichtungsanordnungen mit einem Balg aus einem PTFE-Kunststoffmaterial einzusetzen, bei denen die die Vorspannkräfte aufbringenden Mittel aussenseitig angeordnet sind, um damit dem aggressiven Medium nicht ausgesetzt zu werden. Innenbeaufschlagte Gleitringdichtungsanordnungen haben allerdings den Nachteil einer wesentlich höheren Leckage als aussenbeaufschlagte, was beim Einsatz für aggressive Medien besondere Vorsichtsmassnahmen im Hinblick auf eine umweltverträgliche Entsorgung der Leckage erforderlich macht. Ferner ist es bekannt (US-A-5 013 051), den Balg und endseitige Montagebereiche aus einem elastomeren Material einstückig zu fertigen, wobei der Balg in Rohrform mit einer Knickstelle ausgebildet ist. Ein mehrteiliges Dichtungselement mit einem gewellten Metallbalg ist aus der US-A-4 378 119 bekannt.

Aufgabe der Erfindung ist die Schaffung eines Dichtungselementes für eine unkompliziert aufgebaute, wartungsgünstige Gleitringdichtungsanordnung der gattungsgemässen Art zum Einsatz bei aggressiven Medien und erhöhten Drücken mit minimierter Leckage und geringen baulichen Abmessungen. Insbesondere soll der Bau einer aussenbeaufschlagten Gleitringdichtungsanordnung ermöglicht werden, die die bislang bei erschwerten Dichtungsanforderungen eingesetzten doppeltwirkenden Gleitringdichtungsanordnungen mit Sperrfluidvorlage in vielen Anwendungsfällen ersetzen kann.

Es wurde festgestellt, dass diese Aufgabe in überraschend einfacher Weise dadurch gelöst wird, dass gemäss dem kennzeichnenden Teil des Anspruches 1 bei einer einfachwirkenden Gleitringdichtungsanordnung ein einstückig geformtes Dichtungselement mit einem schlangenlinienförmig gewellten Balgbereich in Kombination mit einem speziellen Kunststoffmaterial vorgesehen wird. Dieses Dichtungselement kann nicht nur die Funktion der dynamischen Abdichtung der Gleitringdichtungsanordnung übernehmen, sondern es kann insbesondere auch die statische und dynamische Vorspannung aufbringen, mit der die Gleitringe bei Betrieb und Stillstand zu beaufschlagen sind, damit die gewünschte Dichtwirkung in jedem dieser Betriebszustände erhalten bleibt. Da das Dichtungselement nach der Erfindung eine Vielzahl von Funktionen übernimmt, für die bislang getrennte Bauteile vorgesehen werden mussten, ermöglicht die Erfindung die Bereitstellung einer einfach wirkenden, aussenbeaufschlagten Gleitringdichtungsanordnung, die nicht nur hinsichtlich der Leckage gegenüber bekannten einfach wirkenden Gleitringdichtungsanordnungen wesentlich minimiert ist, sondern auch mit geringen Abmessungen ausgebildet werden kann, so dass sie sich zum Einbau in Gerätschaften mit geringem Raumangebot eignet. Die Gleitringdichtung kann ohne weiteres so ausgebildet werden, dass sie den Anforderungen an DIN 24960 Rechnung trägt. Die Erfindung stellt damit einen wesentlichen Beitrag in der Entwicklung preisgünstiger, umweltverträglicher Dichtungen für aggressive Medien dar, für welchen Einsatz bislang in erster Linie komplizierte, doppelt wirkende Gleitringdichtungsanordnungen in Frage kamen. sein. Bezüglich vorteilhafter Weiterbildungen der Erfindung wird auf die Unteransprüche verwiesen.

Das erfindungsgemässe Dichtungselement kann sowohl als dynamisches, mit einer Welle rotierendes Bauteil als auch als statisches an einem stationären Gehäuse montiertes Bauteil ausgebildet sein.

Die Erfindung wird nachfolgend anhand von Ausführungsformen und der Zeichnung näher erläutert. Es zeigen:
- Fig. 1: in längsgeschnittener fragmentarischer Ansicht eine Gleitringdichtungsanordnung mit einem Dichtungselement gemäss der vorliegenden Erfindung in Verbindung mit deren Einsatz zur Abdichtung einer Pumpe,
- Fig. 2A, 2B: Detailansichten von Modifikationen von Mitteln zur Halterung eines Gleitrings am Dichtungselement, und
- Fig. 3A, 3B: Detailansichten von Modifikationen von Mitteln zur Fixierung des Dichtungselementes an einem Bauteil.

Obschon die Erfindung in Verbindung mit der Anwendung zur Abdichtung der Antriebswelle eines Pumpenlaufrades gegenüber einem Pumpengehäuse gezeigt ist, versteht es sich, dass die Erfindung auf dieses Anwendungsgebiet nicht beschränkt ist, sondern immer dann vorteilhaft zur Anwendung kommen kann, wenn es gilt, Medien, insbesondere solcher aggressiver Art, mittels einer einfach aufgebauten Gleitringdichtungsanordnung gegenüber der Aussenumgebung wirksam abzudichten.

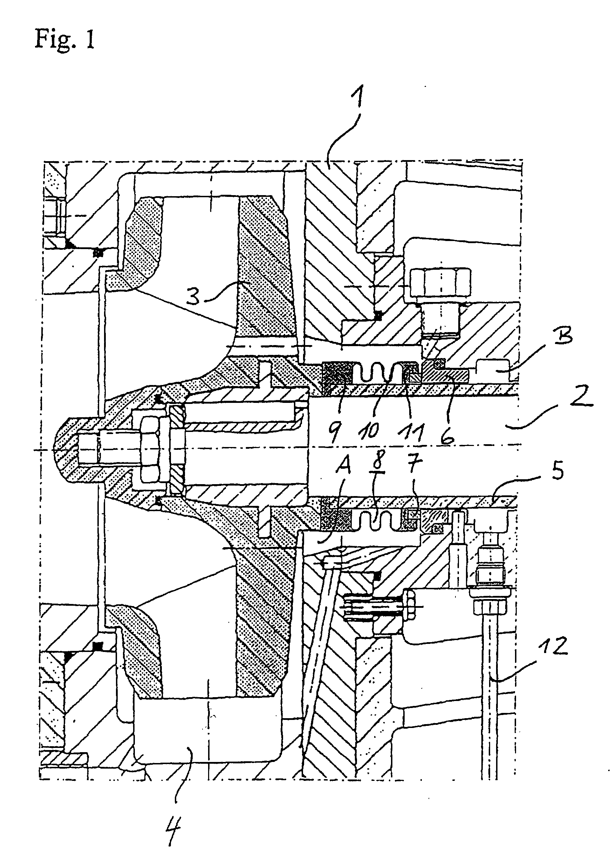

In Fig. 1 trägt ein Pumpengehäuse das Bezugszeichen 1, die Antriebswelle das Bezugszeichen 2 und ein auf der Antriebswelle befestigtes Pumpenlaufrad das Bezugszeichen 3. Das Pumpenlaufrad 3 rotiert in einem Pumpenraum 4. Auf der Welle 2 ist eine Hülse 5 aufgesetzt, auf der eine Gleitringdichtungsanordnung nach der Erfindung angeordnet ist. Die Gleitringdichtungsanordnung umfasst eine Gleitringpaarung, bestehend aus einem drehfest am Gehäuse 1 gehaltenen Gleitring 6 und einem damit zusammenwirkenden rotierenden Gleitring 7, der zusammen mit der Antriebswelle 2 rotiert. Zwischen den zugewandten Gleitflächen der Gleitringe 6, 7 bildet sich bei Betrieb ein Dichtspalt, um einen Raum A aussenumfänglich der Gleitringdichtungsanordnung gegenüber einem Raum B abzudichten, der mit innenumfänglichen Bereichen der Gleitringdichtungsanordnung in Fluidverbindung steht. Der aussenumfängliche Raum A steht in Verbindung mit dem Pumpenraum 4 und ist demzufolge mit dem zu pumpenden Medium beaufschlagt.

Der Raum B kann drucklos sein und demzufolge unmittelbar mit der Atmosphäre in Verbindung stehen, oder, wie dargestellt, einen Ringraum darstellen, der mit einer Abführleitung 12 für eine im Raum B angesammelte geringe Leckage des abzudichtenden Mediums in Verbindung steht.

Der rotierende Gleitring 7 ist von einem Dichtungselement gehalten, das das allgemeine Bezugszeichen 8 trägt. Das Dichtungselement umfasst einen Balgbereich 10, der endseitig je mit einem Montagebereich 9, 11 verbunden ist. Einer der Montagebereiche 9, 11, in Fig. 1 der linksseitige Montagebereich 9, hat einen von seinem inneren Umfang radial nach innen gegen die Antriebswelle 2 sich erstreckenden Montageflansch, der zwischen einer Anlagefläche des Pumpenlaufrades 3 und einer benachbarten Stirnseite der Hülse 5 eingeklemmt ist, um den Montagebereich 9 drehfest gegenüber der Antriebswelle 2 zu fixieren. Andere Montagemittel zur drehfesten Fixierung des Montagebereiches 9 können vorgesehen werden, worauf später noch eingegangen wird.

Der andere, in Fig. 1 rechtsseitige Montagebereich 11, ist Träger des rotierenden Gleitrings 7, der auf verschiedene Weise daran befestigt sein kann, worauf ebenfalls noch später eingegangen wird. Die in Fig. 1 gezeigte Befestigung des Gleitrings 7 am Montagebereich 11 in in Form eines Gestalt eines Pressitzes, indem der Gleitring 7 unter einer äusseren Kraft in eine im Durchmesser verkleinerte Ausnehmung des Montagebereiches 11 eingedrückt wird, oder zwischen den beiden Teilen eine Schrumpfverbindung vorgesehen wird.

Der zwischenliegende Balgbereich 10 schafft eine elastische Verbindung zwischen den eher steifen Montagebereichen 9, 11, so dass eine relative axiale und radiale Bewegung zwischen den Montagebereichen 9, 11 ermöglicht wird. Ferner dient der zwischenliegende Balgbereich 10 zur Beaufschlagung des den rotierenden Gleitring 7 tragenden Montagebereiches 11 mit einer axialen Vorspannkraft, um den rotierenden Gleitring 7 gegen den stationären Gleitring 6 zu drücken, so dass die Gleitflächen der Gleitringe 6, 7 in abdichtender Eingriffnahme miteinander gehalten sind. Der Balgbereich 10 hat eine schlangenlinienförmig gewellte Querschnittskonfiguration, was die federnde Eigenschaft fördert.

Erfindungsgemäss ist das Dichtungselement 8, bestehend aus dem Balgbereich 10 und den endseitigen Montagebereichen 9, 11, aus einem Kunststoffmaterial aus der Gruppe der Polyetheretherketon (PEEK) oder der Athylen-Chlorotrifluor-Copolymer (ECTFE) umfassenden Materialien gebildet. PEEK ist unter dem Handelsnamen TECAPEEK bei der Firma Ensinger GmbH & Co., D-93413 Cham, und ECTFE unter dem Handelsnamen HALAR bei der Firma Green, Tweed & Co., Kulpsville/USA, PA erhältlich. Beide Kunststoffmaterialien zeichnen sich durch eine hohe Beständigkeit gegenüber einer Vielzahl von Laugen und Säuren und einer thermischen Beständigkeit bis ca. 250°C (PEEK) bzw. 160°C (ECTFE) aus. Ein weiterer Vorteil dieser Materialien sind ihre guten federelastischen Eigenschaften selbst bei höheren Temperaturen und damit ihre Eignung, die vorerwähnte Vorspannkraft zur Vorspannung des rotierenden Gleitrings 7 gegen den stationären Gleitring 6 aufzubringen, so dass auf separate Vorspannmittel, z.B. in Gestalt von Vorspannfedern, wie sie bei bekannten Gleitringdichtungsanordnung verwendet werden, verzichtet werden kann.

Das rotierende Dichtungselement 8 stellt ein einstückiges Formteil dar, bei dem der Balgbereich 10 und die Montagebereiche 9, 11, aus einem der genannten Kunststoffmaterialien geformt sind.

Das Kunststoffinaterial für die Montagebereiche 9, 11 und den zwischenliegenden Balgbereich 10 kann ferner in geeigneter Weise, z.B. durch SiC-Fasern, Glasfasern, keramische Fasern oder Graphitfasern verstärkt sein, d.h. einen faserverstärkten Verbundwerkstoff darstellen.

Der Gleitring 7 kann aus irgendeinem geeigneten gegenüber aggressiven Medien beständigen Material, wie beispielsweise Siliciumcarbid, keramisches Sintermaterial, wie Aluminiumoxid, oder dgl. bestehen.

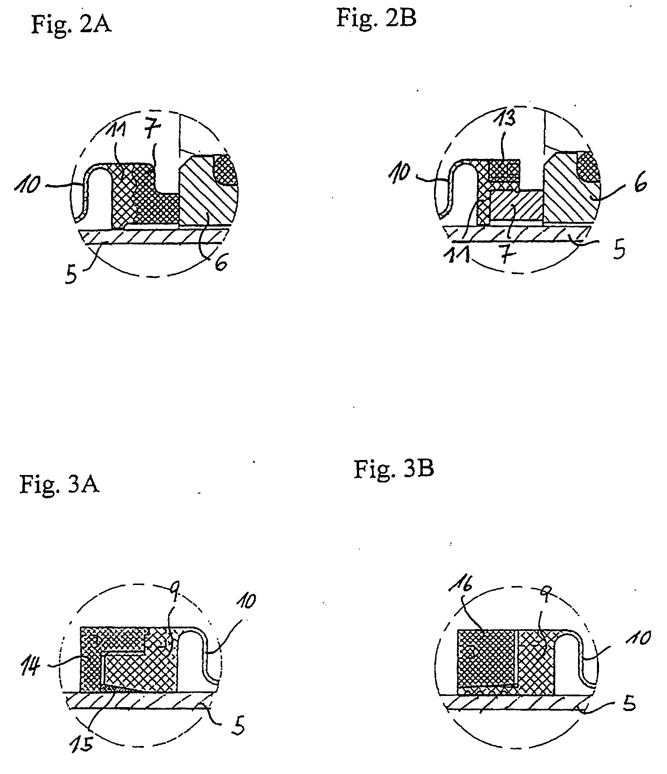

Der rotierende Gleitring 7 kann ein separates Bauteil (Fig. 1 und 2B) sein, das am zugehörigen Montagebereich 11 des Dichtungselementes 8, wie vorbeschrieben, befestigt ist, oder integrales Bestandteil (Fig. 2A) des Montagebereiches 11 darstellen.

Fig. 2A zeigt eine integrale Ausbildung des Gleitrings 7 durch Ansintem von gleitringgeeignetem Material am Montagebereich 11.

Fig. 2B zeigt eine alternative Befestigung des Gleitrings 7 am Montagebereich 11 mittels eines Klemmringes 13 mit einem Schraubgewinde an seinem inneren Umfang, das mit einem Schraubgewinde am äusseren Umfang einer Aussparung im Montagebereich 11 zusammenwirken kann. Beide Gewinde haben komplementäre, keilförmig verlaufende Gewindekernbereiche, so dass beim Aufschrauben des Klemmrings 13 auf den Montagebereich 11 eine radiale Kraft ausgeübt wird, die einen festen Klemmsitz des Gleitrings 7 gegenüber dem Montagebereich 11 schafft.

Fig. 3A und 3B zeigen Alternativen zur Befestigung des Montagebereiches 9 des Dichtungselements 8 gegenüber der Antriebswelle 2 bzw. Hülse 5. Bei der Anordnung nach Fig. 3A ist ein Klemmring 14 vorgesehen, der in Schraubverbindung mit dem Montagebereich 9 gebracht werden kann. Unter der dabei bewirkten axialen Bewegung des Klemmringes 14 wird ein Keilelement 15 in den Bereich zwischen der Hülse 5 bzw. Antriebswelle 2 und dem Montagebereich 9 gedrückt, um eine kraftschlüssige drehfeste Verbindung und gleichzeitig eine wirksame Abdichtung zwischen diesen Bauteilen zu schaffen.

Fig. 3B zeigt einen Klemmring 16 mit einer Ausbildung ähnlich demjenigen nach Fig. 2B, um einen Abschnitt des Montagebereiches 9 gegen die Hülse 5 zu pressen. Statt eines Klemmrings könnte auch ein Spreizring in eine Gewindeausnehmung des Montagebereiches 9 eingeschraubt werden, um eine radiale Spreizung des Montagebereiches 9 zu bewirken. Schliesslich könnte um den Montagebereich 9 ein Spannring gelegt werden, dessen radiale Abmessung, z.B. mittels einer Stellschraube, verändert werden kann. Weitere Montagemöglichkeiten für die drehfeste und Abdichtung Verbindung zwischen dem Montagebereich 9 und der Antriebswelle 2 bzw. Hülse 5 sind möglich, um die Drehbewegung der Antriebswelle 2 über den Montagebereich 9, den zwischenliegenden Balgbereich 10 und den Montagebereich 11 auf den davon gehaltenen Gleitring 7 zu übertragen, so dass der Gleitring 7 die Drehbewegung der Antriebswelle 2 unter den beim Betrieb auftretenden mechanischen und dynamischen Vorspannkräften, die den rotierenden Gleitring 7 gegen den stationären Gleitring 6 drücken, schlupffrei mitmachen kann.

Das Dichtungselement nach der Erfindung kann zusammen mit der Gleitringdichtungsanordnung oder als separates Bauteil zur nachträglichen Montage bereitgestellt werden. Vorzugsweise sind die Einbaumasse so, dass eine aussen mit dem Medium beaufschlagte Gleitringdichtungsanordnung für enge Normeinbauräume geeignet ist. Obschon die Erfindung vorausgehende anhand einer Ausgestaltung des Dichtungselementes zur Montage an einem rotierenden Bauteil beschrieben wurde, versteht es sich das Dichtungselement bei bestimmten Anwendungfällen, z.B. beim Einsatz in Kühlwasserpumpen von Kraftfahrzeugen, auch als stationäres Element einer Gleitringdichtungsanordnung ausgebildet sein könnte. In diesem Fall würde der vom Balg des Dichtungselementes gehaltene Gleitring mit einem mit einer Welle rotierenden Gleitring zusammenwirken. Bei einem derartigen Einsatz steht die Minimierung der baulichen Abmessungen der Gleitringdichtungsanordnung und der Leckage im Vordergrund. Wichtig ist in jedem Fall, dass das Dichtungslement eine ausreichende chemische Beständigkeit besitzt, gute Federeigenschaften hat und seine mechanischen und thermischen Eigenschaften auch bei erhöhten Temperturen von z.B. ca. 100° C beibehält. Wegen der schlangenlinienförmigen Weldung und der verwendeten Kunststoffmaterialien hat der Balgbereich eine ausreichende Torsionssteifigkeit; um die bei Betrieb auftretenden Drehmomente ohne wesentliche Torsionsverformungen auf den Gleitring übertragen zu können.

## Patentansprüche

1. Dichtungselement für eine Gleitringdichtungsanordnung, mit einem Balgbereich (10) und endseitig des Balgbereiches vorgesehenen Montagebereichen (9,11), von denen einer zur drehfesten Montage an einem Bauteil und der andere zur Halterung eines Gleitrings ausgelegt ist, wobei das Dichtungselement ein einstückiges Formteil aus einem elastischen Kunststoffmaterial ist, **dadurch gekennzeichnet, dass** das Dichtungselement einen schlangenlinienförmig gewellten Balgbereich (10) umfasst, der zur Ausübung einer axialen, Vorspannkraft auf den gleitringseitigen Montagebereich (11) ausgebildet ist, indem das Dichtungselement aus der Gruppe der PEEK oder der ECTFE umfassenden Kunststoffmaterialien geformt ist.

2. Dichtungselement nach Anspruch 1, **dadurch gekennzeichnet, dass** der Gleitring an dem betreffenden Montagebereich (11) kraft- oder formschlüssig montierbar ist.

3. Dichtungselement nach einem der Ansprüche 1, **dadurch gekennzeichnet, dass** der Gleitring als einstückiger Gleitringabschnitt des betreffenden Montagebereiches (11) ausgebildet ist.

4. Dichtungselement nach Anspruch 3, **dadurch gekennzeichnet, dass** die Stirnfläche des Gleitringabschnitts mit einem Gleitwerkstoff versehen ist.

## Claims

1. A sealing element for a face seal assembly, including a bellows portion (10) and mounting portions (9,11) at the ends of the bellows portion, one of said mounting portions being designed for mounting in a non-rotational relationship to a component and the other for retaining a seal ring, said sealing element being an integrally moulded piece of a plastics material, **characterized in that** the sealing element comprises a bellows portion (10) undulated in serpentine manner and formed for exerting an axial biasing force against the mounting portion (11) facing said seal ring by forming the sealing element of plastics materials selected from the group comprising PEEK or ECTFE.

2. The sealing element according to claim 1, **characterized in that** said seal ring is mounted to the concerned mounting portion (11) by frictional or form fit.

3. The sealing element according to claim 1, **characterized in that** said seal ring is formed by an integral seal ring portion of the concerned mounting portion (11).

4. The sealing element according to claim 3, **characterized in that** the end face of said seal ring portion is provided with a material having tribologic properties.

## Revendications

1. Elément d'étanchement pour un dispositif d'étanchement à bagues de glissement, comprenant une région (10) formant soufflet et des zones de montage (9, 11) qui sont prévues aux extrémités de ladite région formant soufflet, dont l'une est conçue pour être montée sur une pièce structurelle, avec verrouillage rotatif; et l'autre est conçue pour retenir une bague de glissement, l'élément d'étanchement se présentant comme une pièce monobloc venue de moulage en une matière plastique élastique, **caractérisé par le fait que** ledit élément d'étanchement englobe une région (10) formant soufflet, comportant une ondulation en forme de serpentins et réalisée pour appliquer une force axiale de précontrainte à la zone de montage (11) située côté bague de glissement, étant donné que ledit élément d'étanchement fait partie du groupe des matières plastiques comprenant le PEEK ou l'ECTFE.

2. Elément d'étanchement selon la revendication 1, **caractérisé par le fait que** la bague de glissement peut être montée, mécaniquement ou par concordance de formes, sur la zone de montage (11) considérée.

3. Elément d'étanchement selon la revendication 1, **caractérisé par le fait que** la bague d'étanchement est réalisée sous la forme d'une région monobloc, à bague de glissement, de la zone de montage (11) considérée.

4. Elément d'étanchement selon la revendication 3, **caractérisé par le fait que** la face extrême de la région à bague de glissement est munie d'un matériau de glissement.
